# EUROPEAN PATENT APPLICATION

(11) **EP 4 111 868 A1**
(43) Date of publication of application: **04.01.2023**
(21) Application number: 21182142.6
(22) Date of filing: 28.06.2021
(51) Int. Cl.: A23F 3/06

(54) **A PROCESS FOR PRODUCING A TEA PRODUCT**

(71) Applicant: Ekaterra Research and Development UK Limited, London EC4Y 0DY (GB)
(72) Inventor: The designation of the inventor has not yet been filed
(74) Representative: Mewburn Ellis LLP

(57) **Abstract**

The present invention relates process for producing a tea product with enhanced sensorials. Accordingly, the present invention disclosed a process for producing a tea product comprising the steps of:
i) providing a leaf tea product with moisture content of less than 10% by weight;
ii) adding 20 to 70% by weight of water to the leaf tea product to obtain a wetted leaf tea product;
iii) subjecting the wetted leaf tea product to a step of steam treatment for a period of less than 3 minutes at a pressure of 600 to 1200 kPa and temperature of 150 to 200°C;
iv) withdrawing the pressure and exposing the leaf tea product to a temperature of 18 to 40°C;
v) drying the leaf tea product to a moisture content of less than 5% by weight.

## Description

### Field of the Invention

The present invention relates to a process for producing a tea product. More particularly the present invention relates to a process for producing a black tea product with enhanced sensorials.

### Background and Prior Art

Tea is one of the most popular beverages in the world. It is believed that consumption of tea refreshes the mind. Polyphenols present in the tea are also considered to be good for human health. There are several different kinds of commercially available tea such as black tea, green tea, oolong tea, white tea, *etc.* Of these, black tea is perhaps the most common. Black tea is generally prepared by a process which includes the steps of withering, macerating, fermenting and firing/drying. The characteristic colours, flavours and aromas of black tea are produced during deferent stages of black tea manufacturing. In tea processing, the term 'fermentation' is traditionally used to refer to enzymatic oxidation. After fermentation, the tea is dried at high temperature to arrest enzyme action and to reduce the moisture content to a low level.

One of the main attributes/sensorials of black tea product is its rich red coloured infusion. Therefore, there has always been an interest in improving the redness of the infusion produced by a black leaf tea product to enhance the black tea characteristics.

US 2008/0118602 (Unilever) discloses a process for the manufacture of a tea product which is readily infusible and has improved red colour. The process comprises contacting black tea with ascorbic acid and/or its salts, an oxidizing agent and water for a period of at least 5 minutes followed by drying to prepare a tea product that is infusible in water at 5 to 100°C.

WO 2013/075912 (Unilever) discloses a process for producing a black tea product with enhanced sensorials. The process involves a step of anaerobic incubation at specific temperatures and for specific durations and provides tea products having a relatively high amount of polyphenols which have the sensorials of black tea, but without the addition of any exogenous theaflavins and/or catechins.

WO14206883A1 (Unilever) discloses a process of producing a long leaf tea product with black tea characteristics. The process comprises the steps of: (a) incubating fresh tea leaf at a temperature in the range 4 degrees centigrade to 60 degrees centigrade under anaerobic conditions for a period of 4 to 36 hours; and (b) exposing the leaf at a temperature of 15 to 35 degrees centigrade for 70 minutes to 4 hours; wherein there is no step of comminution of the tea leaf before incubation and/or before step (b).

Despite prior art which is directed to black tea products with enhanced sensorial characteristics, this technical field remains important for the tea industry, and requires the development of new technologies to improve it further.

The present inventors have surprisingly found that a process including steam treatment of a finished black tea leaf product under specific conditions produces a tea product with enhanced red colour.

### Summary of the invention

In a first aspect, the present invention therefore provides a process for producing a tea product comprising the steps of:
i) providing a leaf tea product with a moisture content of less than 10% by weight;
ii) adding 20 to 70% by weight of water to the leaf tea product to obtain a wetted leaf tea product;
iii) subjecting the wetted leaf tea product to a step of steam treatment for a period of less than 3 minutes at a pressure of 600 to 1200 kPa and a temperature of 150 to 200°C;
iv) withdrawing the pressure and exposing the leaf tea product to a temperature of 18 to 40°C;
v) drying the leaf tea product to a moisture content of less than 5% by weight.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per* se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea product" for the purposes of this invention means a tea product that contains tea leaves and/or stem in an uninfused form, and that has been dried to a moisture content of less than 30% by weight, and usually has moisture content in the range 1 to 10% by weight (i.e. "made tea" which has undergone the regular tea processing whether green or black).

"Fresh tea leaf" refers to tea leaf, buds and/or stem that have never been dried to a water content of less than 30% by weight, and usually have moisture content in the range 60 to 90%.

"Fermentation" refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

"Black tea" refers to substantially fermented tea. Black tea has different characteristics to green tea. Black tea is more astringent in taste and less bitter than green tea. The redness of black tea liquor is also significantly higher than that of green tea. Black tea also contains higher level of theaflavins.

"Green tea" refers to substantially unfermented tea. Green tea has different characteristics than black tea. Green tea liquor is light in colour unlike black tea. Green tea also enriched with catechins and low or no amount of theaflavins.

The present invention discloses a process for producing a tea product comprising the steps of:
i) providing a leaf tea product with a moisture content of less than 10% by weight;
ii) adding 20 to 70% by weight of water to the leaf tea product to obtain a wetted leaf tea product;
iii) subjecting the wetted leaf tea product to a step of steam treatment for a period of less than 3 minutes at a pressure from 600 to 1200 kPa and temperature between 150 to 200°C;
iv) withdrawing the pressure and exposing the leaf tea product to a temperature in the range from 18 to 40°C;
v) drying the leaf tea product to a moisture content of less than 5% by weight.

The process starts with a leaf tea product with moisture content less than 10%. Leaf tea product used herein is made tea i.e., leaves that have already gone through the regular tea manufacturing process. The leaf tea product is preferably a black tea.

A typical black tea manufacturing process comprises the steps of withering, comminution (maceration), fermentation and drying. The fresh tea leaf with moisture content in the range of 60 to 90% by weight preferably 70 to 75% by weight first undergoes withering. After withering the withered tea leaves are macerated for size reduction. This size reduction step releases enzymes existing in the lea leaves. After that, the macerated tea leaves undergo fermentation followed by drying to obtain a black leaf tea product. The terms withering, maceration, fermentation and drying used herein are having their usual meaning with respect to black the manufacturing process.

In one of the preferred embodiments, there is an additional step of incubating the fresh tea leaf at a temperature in the range of 4°C to 80°C under anaerobic conditions for a period of 4 to 72 hours. The term "anaerobic conditions" as used herein preferably means that the gas phase in contact with the leaf has less than 3%, preferably less than 2% and more preferably less than 1% oxygen by volume. It is particularly preferred that the gas phase in contact with the leaf is substantially free of oxygen.

The duration of time between plucking the tea leaf and the incubation is preferably less than 24 hours, more preferably less than 12 hours and most preferably less than 8 hours. However, it is possible that the duration of time between plucking the fresh tea leaf and the incubation is longer than 24 hours if the tea leaf is stored at temperature of less than 15°C.

Anaerobic conditions:
The anaerobic conditions are optionally achieved by:
   i. placing the fresh tea leaf in a container, and closing the container, or;
   ii. placing the tea leaf in a container, purging a gas essentially free of oxygen through the container, and closing the container, or placing the leaf in an airtight chamber or under vacuum.

Preferably, the anaerobic conditions are achieved by: placing the fresh tea leaf in a container, and closing the container, or placing the tea leaf in a container, purging a gas essentially free of oxygen through the container through the container, and closing the container.

By placing the fresh leaf in a container and closing the container, the oxygen concentration in the gas phase decreases with time and anaerobic conditions are achieved after keeping the container closed for a certain amount of time. The container is closed for a duration of preferably greater than 3 hours, more preferably greater than 4 hours and most preferably greater than 6 hours or even greater than 8 hours.

Alternatively, and more preferably, the anaerobic conditions are achieved by placing the leaf in a container, purging a gas essentially free of oxygen through the container and closing the container. The gas other than oxygen is preferably nitrogen or carbon dioxide, most preferably nitrogen.

Once the container is closed in step (i) or (ii) above, there is no particular restriction as to the pressure in the container. The pressure inside the closed container is preferably from 1.33 X 10² Pa to 1.33 X 10⁵ Pa, more preferably 1.33 X 10³ Pa to 1.06 X 10⁵ Pa and most preferably 2.67 X 10³ Pa mm Hg.

It is preferred that the moisture loss from the leaf during the step is as low as possible. This is advantageously and conveniently achieved by carrying out this step under closed conditions. The incubated tea leaf after this step preferably comprises water in the range of from 70 to 75% by weight.

The anaerobic Incubation temperature is in the range from 4°C to 80°C, preferably in the range from 4°C to 65°C, more preferably in the range from 10°C to 50°C.

The time of anaerobic incubation is in the range of 4 to 90 hours, preferably 4 to 60 hours, more preferably 6 to 40 hours and most preferably 8 to 20 hours.

In the process of the present invention water is added to the leaf tea product to make it wet. The amount of water added is in the range from 20 to 70% by weight, more preferably from 30 to 60% by weight, furthermore preferably from 40 to 60% by weight and most preferably from 50 to 60% by weight.

The wetted leaf is then subjected to a step of steam treatment for a period of less than 3 minutes at a pressure of 600 to 1200 kPa and a temperature of 150 to 200°C. In this step the wetted leaf is subjected to high temperature and pressure for very short duration. This step can be performed in a reactor or closed vessel with the provision of steam injection and pressure control. The preferred temperature is in the range from 160 to 190°C, more preferably from 160 to 190°C and most preferably from 170 to 190°C. The pressure for this treatment step is preferably in the range from 700 to 1200 kPa, more preferably from 800 to 1200 kPa and most preferably from 900 to 1200 kPa. The time of steam treatment step is very short and is preferably less than 2 minutes and more preferably less than 1 minute. The time of steam treatment is preferably in the range from 1 second to 3 minutes, more preferably from 3 seconds to 2 minutes, further preferably from 5 seconds to 1 minute and most preferably from 10 seconds to 50 seconds.

After the steam treatment step the pressure is withdrawn and the steam treated leaves are then exposed to a lower temperature (ambient) ranging from 18 to 40°C. These two steps are preferably carried out with no substantial gap is time. One of way of achieving this is by releasing the leaf material directly from the steam reactor after the short steam exposure to a vessel maintained at ambient temperature (18 to 40°C).

After the above step the leaf tea product is dried to a moisture content of less than 5% by weight. The drying step is preferably carried out by thermal drying, freeze drying or vacuum drying.

Thermal drying is preferably carried out by contacting the leaf with air; with the temperature of air being preferably 80 to 160°C, more preferably 90 to 150°C, most preferably 100 to 130°C. Thermal drying may be carried out in any conventional dryer. However, a fluidized bed dryer or a tray dryer is particularly preferred for thermal drying. The leaf can also be dried by vacuum drying. During vacuum drying the tea leaf is subjected to an absolute pressure of preferably from 66.7 to 6.67 X 10⁴ Pa, more preferably from 6.67 X 10³ to 3.9 X 10⁴ Pa and most preferably from 1.3 X 10⁴ to 2.67 X 10⁴ Pa. Vacuum drying is carried out at a temperature in the range of preferably 20 to 70°C, more preferably 25 to 60 °C and most preferably 30 to 55°C. Vacuum drying may be carried out in any suitable vacuum drier, preferably in a rotary vacuum drier.

The present invention will now be demonstrated by way of non-limiting examples below. The examples are for illustration only and do not limit the scope of the invention in any manner.

### Examples:

Three different set of tea products were prepared using commercially available black tea obtained from Kenya. The process of producing such tea products are set out below.

### Example A

Commercially available black tea product as procured above was wetted by adding 50% water by weight. This was then left for 1 hour for moisture ingression into the tea granule. The wetted tea was then dried in a hot air dryer (110°C) until the moisture content was reduced to about 5% by weight.

### Example B

Commercially available black tea product as procured above was wetted by adding 50% water by weight. This was then left for 1 hour for moisture ingression into the tea granule. The wetted material was then placed in a steam explosion reactor and held at 175 ± 2 °C at a pressure of about 900 kPa for about 3 minutes. After that, the material was released into a cyclone which was maintained at ambient temperature (about 25°C). This material was then dried in a hot air dryer (110°C) until the moisture content was reduced to about 5% by weight.

### Example 1

Commercially available black tea product as procured above was wetted by adding 50% water by weight. This was then left for 1 hour for moisture ingression into the tea granule. The wetted material was then placed in a steam explosion reactor and held at 175 ± 2 °C at a pressure of about 900 kPa for about 10 seconds. The material was then released into a cyclone which was maintained at ambient temperature (about 25°C). This material was then dried in a hot air dryer (110°C) until the moisture content was reduced to about 5% by weight.

Tea infusions were prepared for all the above tea products by infusing 2 g of leaf tea in 200 mL of freshly boiled deionized water for 2 minutes without stirring. Infusions colour measurements were done using the following procedure:

### Colour measurement:

Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°- Observer angle. Measurements were made using a quartz cuvette of 10 mm path length. Tea infusions as prepared abovewas filled up to the brim in the cuvette and placed in the instrument for colour measurement. The instrument was calibrated using a standard white tile (Hunterlab Duffuse/8°, mode-RSEX, Port-1" and area- large) in accordance with the instructions provided in the instructions manual. The L*a*b* values were measured at room temperature (25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

The higher the a* value the redder is the infusion.

The results of these experiments are summarized below in Table 1

**Table 1:**

| Example No. | a* value |
|---|---|
| A | 9.65 |
| B | 8.29 |
| 1 | 12.04 |

It is evident that the example that is within the scope of the present invention (Example 1) provides intense red coloured infusions when compared with the control examples (Example A and B). It can also be observed that increasing the exposure time of steam treatment step has negative implications on the a* value.

## Claims

1. A process for producing a tea product comprising the steps of:
i) providing a leaf tea product with moisture content of less than 10% by weight;
ii) adding 20 to 70% by weight of water to the leaf tea product to obtain a wetted leaf tea product;
iii) subjecting the wetted leaf tea product to a step of steam treatment for a period of less than 3 minutes at a pressure of 600 to 1200 kPa and temperature of 150 to 200°C;
iv) withdrawing the pressure and exposing the leaf tea product to a temperature of 18 to 40°C;
v) drying the leaf tea product to a moisture content of less than 5% by weight.

2. A process according to claim 1 wherein the moisture content of the leaf tea product provided in step (i) is less than 5% by weight.

3. A process according to claim 1 wherein the water added in step (ii) is in the range from 40 to 60% by weight of the leaf tea product.

4. A process according to any one of the preceding claims wherein the steam treatment is carried out for less than 1 minute.

5. A process according to any one of the preceding claims wherein the steam treatment is carried out for less than 30 seconds.

6. A process according to any one of the preceding claims wherein the temperature of the steam treatment step is from 160 to 180°C.

7. A process according to any one of the preceding claims wherein the pressure in the steam treatment step is from 700 to 900 kPa.

8. A process according to claim 1 wherein the leaf tea product provided in step (i) is produced by a process comprising the step of incubating fresh tea leaf at a temperature of from 4 to 80°C under anaerobic conditions for a period of 4 to 72 hours.

9. A process as claimed in claim 8 wherein the anaerobic conditions are achieved by:
a) placing the fresh tea leaf in a container, and closing the container; or,
b) placing the tea leaf in a container, purging a gas essentially free of oxygen through the container, and closing the container, or placing the leaf in an airtight chamber or under vacuum.

10. A process as claimed in claim 8 wherein the anaerobic conditions are achieved by placing the fresh tea leaf in a container and closing the container.
